# EUROPÄISCHE PATENTSCHRIFT

(11) **EP 2 709 433 B1**
(45) Veröffentlichungstag und Bekanntmachung des Hinweises auf die Patenterteilung: **23.12.2020**
(21) Anmeldenummer: 12722356.8
(22) Anmeldetag: 16.05.2012
(51) Int. Cl.: A01B 79/00, A01C 21/00

(54) **VERFAHREN ZUM BESTIMMEN EINER APPLIKATIONSMENGE UND VORRICHTUNG ZUR DURCHFÜHRUNG DES VERFAHRENS**
METHOD TO DETERMINE APPLICATION RATE AND DEVICE TO PERFORM THE METHOD
PROCEDE POUR DETERMINER TAUX D'APPLICATION ET DISPOSITIF POUR EFFECTUER LA MÉTHODE

(30) Priorität: 18.05.2011 DE 102011050460
(43) Veröffentlichungstag der Anmeldung: 26.03.2014
(73) Patentinhaber: Georg Fritzmeier GmbH & Co. KG, 85653 Aying (DE)
(72) Erfinder: LIMBRUNNER, Bernhard, 94563 Otzing (DE)
(74) Vertreter: Winter, Brandl, Fürniss, Hübner, Röss, Kaiser, Polte - Partnerschaft mbB
(86) Internationale Anmeldenummer: PCT/EP2012/059211
(87) Internationale Veröffentlichungsnummer: WO 2012/156490

(56) Entgegenhaltungen:
- WO-A1-03/009669
- WO-A1-03/010535
- US-A1- 2004 237 394
- US-A1- 2009 007 485
- US-A1- 2010 222 922

## Beschreibung

Die Erfindung betrifft ein Verfahren zum Bestimmen und zum Ausbringen einer Applikationsmenge und eine Vorrichtung zur Durchführung eines derartigen Verfahrens.

In der Landwirtschaft, insbesondere auf dem Gebiet des Precision-Farming stellt das teilflächenspezifische Ausbringen von Betriebsmitteln oder Wirkstoffen, wie beispielsweise Fungizide, Herbizide, Dünger etc. eine der großen Herausforderungen dar, wobei eine Überversorgung und eine Unterversorgung möglichst vermieden werden sollte. So ist beispielsweise beim Düngen eine Überdüngung sowohl aus ökologischer als auch aus ökonomischer Sicht problematisch. Bei einer Unterdüngung wird der Ertrag des Schlags vermindert, sodass eine bedarfsoptimierte Düngung anzustreben ist.

Aufgrund der Heterogenität von Boden und Kleinklima variieren innerhalb eines Schlages die Ertragsfähigkeit und die Nährstoffverfügbarkeit aus dem Boden. Diese Heterogenitäten führen zu unterschiedlichem Wachstum der Pflanzen und in der Regel zu differenzierter Ertragsbildung und entsprechend unterschiedlichem Düngerbedarf sowie einem Bedarf an anderen Betriebsmitteln. Derzeit wird in der landwirtschaftlichen Praxis die Düngermenge in einheitlicher Dosierung über dem gesamten Schlag ausgebrachtdie genannten Heterogenitäten bleiben häufig unberücksichtigt. Eine derartige einheitliche Düngung führt zu einer mehr oder minder großen Über- bzw. Unterversorgung in einzelnen Teilbereichen mit den damit einhergehenden Nachteilen. Das gleiche gilt im übertragenen Sinne für die Ausbringung anderer Betriebsstoffe, wie Fungizide, Wachstumsregulatoren etc.

Es ist ein System für eine teilflächenspezifische Düngung bekannt, bei dem der Nährstoffstatus einer Pflanze über einen Sensor erfasst und dann der Düngerbedarf in Abhängigkeit von dem Sensorsignal, beispielsweise einem Vegetationsindex und im Bordrechner abrufbaren teilflächenspezifischen Daten berechnet wird. Auf der Basis des Düngerbedarfs wird dann ein Steuersignal für eine Düngerdosiervorrichtung (Ausbringer) generiert. Eine derartige Lösung ist beispielsweise in der DE 199 13 971 A1 offenbart.

Bei diesen Lösungen muss der Sensor zur Berechnung der Düngermenge aus einem Vegetationsindex vor Inbetriebnahme kalibriert werden. Dies kann beispielsweise über einen so genannten N-Tester erfolgen, der jedoch eine Reihe von Nachteilen aufweist. Ein derartiger N-Tester ist im Prinzip nur ein Hilfsmittel. Die Nutzung eines N-Testers ist äußerst umständlich und bedarf einer gewissen Erfahrung. Der N-Tester misst die Transmission von Licht durch die Blätter von Pflanzen. Dieser Wert ist eng korreliert mit dem Chlorophyll- und dem N-Gehalt, nicht aber mit der Menge an Biomasse. Die N-Aufnahme, welche für die Düngerbemessung von Bedeutung ist, errechnet sich aus dem N-Gehalt und der Biomasse. Problematisch ist dabei, dass die N-Aufnahme mehr durch die Biomasse der Pflanze als durch den N-Gehalt bestimmt ist. Wie erwähnt, wird bei der Düngerbemessung mit dem beschriebenen System die Ertragsfähigkeit des Standortes nicht berücksichtigt. Diese Ertragsfähigkeit beeinflusst jedoch den Nährstoffbedarf mehr als Schwankungen in der N-Konzentration in der Pflanze. Pflanzen auf ertragsschwachen Teilflächen weisen meist einen niedrigen N-Bedarf auf - auf derartigen Teilflächen reichen aufgrund anderer ertragsbegrenzender Parameter dementsprechend für ein optimales Wachstum auch niedrige N-Mengen aus, sodass bei Nichtberücksichtigung der Ertragsfähigkeit derartige Teilflächen regelmäßig überdüngt werden. Ertragsstarke Teilflächen erhalten dagegen tendenziell eher zu wenig Dünger.

Darüber hinaus ist der Messwert des beschriebenen Sensors stark von der Sorte abhängig, weshalb so genannte Sortenkorrekturtabellen mitgeliefert werden. Da jedoch vom Bundessortenamt jährlich eine Vielzahl von Sorten zugelassen wird, müssen dementsprechend diese Sortenkorrekturtabellen jährlich aktualisiert werden, was die Handhabung des Sensors weiter erschwert.

Von der Anmelderin wird unter der Marke ISARIA® für Winterweizen eine absolute Kalibrierung und ein Düngesystem mit Berücksichtigung des Ertragspotenzials angeboten. Diese Düngesysteme sind jedoch nur mit Vorbehalt bei anderen Kulturarten einsetzbar.

Die Druckschrift US 2010 222 922 A1 zeigt die Kalibrierung einer Applikationskurve basierend auf drei Wertepaaren aus Vegetationsindex und zugeordneter Applikationsmenge. Dabei wird einem mittleren der erfassten Vegetationsindex-Werte eine gewünschte mittlere Applikationsrate, dem erfassten Maximum eine gewünschte maximale Applikationsrate und dem erfassten Minimum eine gewünschte minimale Applikationsrate fest zugeordnet.

Demgegenüber liegt der Erfindung die Aufgabe zugrunde, ein Verfahren zum Bestimmen oder zum Ausbringen einer Applikationsmenge und eine Vorrichtung zur Durchführung des Verfahrens zu schaffen, durch die eine bedarfsgerechte Applikation von Betriebsstoffen vereinfacht ist.

Diese Aufgabe wird im Hinblick auf das Verfahren durch die Merkmale des Patentanspruchs 1 und in Hinblick auf die Vorrichtung durch die Merkmale des Patentanspruchs 6 gelöst.

Vorteilhafte Weiterbildungen der Erfindung sind Gegenstand der Unteransprüche.

Eine Grundversion des Verfahrens zum Bestimmen und Ausbringen einer Applikationsmenge sieht wie folgt aus:
- 1-Punkt-Kalibrierung des Systems: der Landwirt fährt an einer beliebigen Stelle im Schlag eine gewisse Strecke ab (manuelles Starten und Stoppen der Kalibrierung), ermittelt dort einen Vegetationsindex mittels eines geeigneten Sensors und weist dieser Stelle (dem ermittelten Messwert) eine Applikationsmenge, beispielsweise eine Düngermenge (in kg N/ha) zu.
- Erfindungsgemäß wird als Standard-Steigung der Regelkurve, die dieses Wertepaar (Vergleichsindex und zugewiesene Applikationsmenge) enthält, eine Ausgangssteigung (beim Düngen beispielsweise -6 (d.h. -6 kg N/ha pro Messwert-Änderung), dies ist die Steigung von EC32 bei einem Ertragsniveau von 8,5 t/ha) festgelegt. Der Wert der Steigung, wird am Arbeitsbildschirm angezeigt.
- Der Landwirt beginnt dann seine Applikation, beispielsweise die Düngung mit der vorgegebenen Steigung. Wenn der Sensor oder die Vorrichtung die Ausbringmenge zu wenig oder zu viel reguliert, kann der Landwirt erfindungsgemäß durch eine +/- Taste am Arbeitsbildschirm die Steigung - beispielsweise um jeweils 1 - höher oder niedriger stellen. Dadurch verändert er die Steigung der pro Einheit Messwert -Änderung um jeweils 1 (d.h. die Steigung wird steiler bzw. flacher). Die Steigung kann sowohl positiv (ertragsorientiert) als auch negativ (homogenisiert) gewählt werden. Dabei verläuft die Kennlinie noch durch das eingangs ermittelte Wertepaar.
- Der Landwirt kann bekannte Kalibriereinstellungen bereits vorab einstellen, so dass keine Kalibrierfahrt erforderlich ist.
- Der Landwirt hat erfindungsgemäß weiterhin die Möglichkeit, die Applikationsmenge durch eine +/- Taste zu erhöhen oder zu verringern (dies entspricht einer Parallelverschiebung der Regelkurve).
- Um die Ausbringmenge zu begrenzen, kann im Datenspeicher eine Ober- und/oder Untergrenze für die jeweilige Ausbringmenge definiert sein, die nicht über- bzw. unterschritten werden kann.
- Das Applikationssystem ist nun kalibriert (1-Punkt-Kalibrierung).
- Vorzugsweise ist für den Auftrag eine Ertragspotentialkarte an einem Rechner, beispielsweise an einem Tablett-PC hinterlegt.
- Der Landwirt führt an einer bestimmten Stelle die oben beschriebene "1-Punkt-Kalibrierung" durch.
- Aufgrund der hinterlegten Ertragspotentialkarte kann das Ertragspotential des Ortes der Kalibrierung bestimmt werden. => bei dem entsprechenden Ertragspotential entspricht dann einem Messwert von xx einer Applikationsmenge, beispielsweise eine Düngermenge von yy kg/ha.
- Wenn der Sensor nun in eine andere Ertragszone kommt, muss die errechnete Applikationsmenge mit entsprechenden Zu- bzw. Abschlägen verrechnet werden (entspricht einer Parallelverschiebung der Regelkurve), um eine Anpassung an das aus der Ertragspotentialkarte ausgelesene andere Ertragspotential vorzunehmen. Diese Zu- und Abschläge können vom Landwirt direkt vorgegeben werden.
- Die Applikationsmenge wird dann in Abhängigkeit von dem vom Sensor erfassten Vegetationsindex aus der kalibrierten Kennlinie ausgelesen und über einen Dosierer oder dergleichen ausgegeben.

Die erfindungsgemäße Vorrichtung hat einen Sensor, über den beispielsweise ein Vegetationsindex erfassbar ist, der mit dem Entwicklungsstatus eng verknüpft ist. Die Vorrichtung ist des Weiteren so ausgelegt, dass aus einem Datenspeicher in Abhängigkeit von dem über den Sensor mittel- oder unmittelbar erfassten Entwicklungsstatus, beispielsweise einem Nährstoffstatus, mit Hilfe der bei der 1-Punkt-Kalibrierung definierten Kennlinie die Applikationsmenge (der Düngerbedarf oder die auszubringende Düngermenge) auslesbar ist.

Die Vorrichtung ist des Weiteren erfindungsgemäß mit einer Korrektureinrichtung ausgeführt, die eine manuelle Änderung der Steigung und/oder des Verlaufs, insbesondere eine Parallelverschiebung der bei der 1-Punkt-Kalibrierung definierten Kennlinie ermöglicht, um eine Über- oder Unterregulierung der ausgebrachten Applikationsmenge zu vermeiden.

Der Regelbereich kann zusätzlich durch Festlegen einer Ober- oder Untergrenze für die Applikationsmenge eingegrenzt sein.

Die erfindungsgemäße Vorrichtung ermöglicht somit mit minimalem Software- und Hardwareaufwand eine von Erfahrungswerten abhängige Kalibrierung des Sensorsystems oder Ausbringung einer Applikationsmenge.

Eine derartige Vorrichtung kann kombiniert werden mit einem Applikationsgerät, zum Ausbringen derjenigen Applikationsmenge, beispielsweise der Düngermenge, die nach dem erfindungsgemäßen Verfahren ermittelt wurde.

Die vorstehend skizzierte, erfindungsgemäße 1-Punkt-Kalibrierung ist in kürzester Zeit durchführbar. Die vorbeschriebene 1-Punkt-Kalibrierung wird vorzugsweise nur in einer Ertragspotentialszone ausgeführt, wobei dann in anderen Zonen die Kennlinien durch Zu- bzw. Abschläge, d. h., durch eine Parallelverschiebung der aus der 1-Punkt-Kalibrierung resultierenden Kennlinie ermittelt werden.

Die einzige Figur zeigt eine Kennlinie, die bei dem erfindungsgemäßen Verfahren verwendet wird, wobei diese Kennlinie die Abhängigkeit der Applikationsmenge vom IRMI zeigt. Der IRMI ist ein Vegetationsindex, der von der Anmelderin mit dem eingangs beschriebenen System ISARIA ermittelt wird und steht in einem sehr engen Zusammenhang zum Entwicklungsstatus von Pflanzenbeständen. Beim dargestellten Ausführungsbeispiel wird eine lineare Kennlinie verwendet, prinzipiell können wir jedoch auch andere Kennlinienarten zugrunde gelegt werden, wobei dann über den Landwirt eine jeweilige Anpassung erfolgt.

Das erfindungsgemäße Verfahren wird im Folgenden anhand eines Ausführungsbeispiels erläutert, bei dem als Applikation Dünger ausgebracht werden soll. Das gleiche Verfahren lässt sich im Prinzip auch zur Applikation anderer Betriebsstoffe, beispielsweise von Fungiziden, Wachstumsregulatoren, Sikkationsmitteln verwenden.

Gemäß den vorstehenden Ausführungen fährt der Landwirt zunächst im Schlag eine bestimmte Position an und ermittelt dort mittels des Sensors, den Entwicklungsstatus, beim Düngen somit den Nährstoffstatus. Beim beschriebenen Ausführungsbeispiel wird der Vegetationsindex "IRMI" verwendet. Selbstverständlich können auch andere Indices zur Charakterisierung des Nährstoffstatus verwendet werden. Bei dem dargestellten Ausführungsbeispiel wird über den Sensor ein Entwicklungsstatus (Vegetationsindex) von "24,5" gemessen. Der Landwirt weist dann diesem Messwert eine vorbestimmte Applikationsmenge (Düngermenge), im dargestellten Ausführungsbeispiel etwas mehr als 65 kg/ha zu. Je nach Applikation kann die Applikationsmenge auch in l/ha angegeben sein. Wie erläutert, wird eine lineare Kennlinie mit einer vorbestimmten Steigung angenommen, die durch dieses Wertepaar (Entwicklungsstatus, Applikationsmenge) verläuft. Bei dieser vorgegebenen Steigung und der Kalibrierung der Kennlinie ergibt sich beispielsweise bei einem Entwicklungsstatus von "20" eine Applikationsmenge von ebenfalls 20 kg/ha.

Wie bereits eingangs erläutert, kann zur Eingrenzung des Regelbereichs eine Untergrenze und eine Obergrenze vorgegeben werden, wobei die Untergrenze beim dargestellten Ausführungsbeispiel bei einer Applikationsmenge von 40 kg/ha liegt, während die Obergrenze bei 80 kg/ha angeordnet ist. D. h., die auszubringende Applikationsmenge ist auf diesen Bereich zwischen der Untergrenze und der Obergrenze beschränkt. Dem entsprechend werden bei diesem Ausführungsbeispiel für Werte des Vegetationsindex IRMI von 20 bis 22 konstant eine Applikationsmenge von 40 kg/ha ausgegeben. Für IRMI-Werte oberhalb von 26 beträgt die Applikationsmenge konstant 80 kg/ha. Bei der Einschränkung des Regelbereichs durch eine Unter- und eine Obergrenze ergibt sich somit ein etwa Z-förmiger Verlauf der Kennlinie mit dem durch die Untergrenze und die Obergrenze vorgegebenen Parallelabschnitten und dem durch die Steigung der Kennlinie bestimmten dazwischen liegenden schräg angestellten Abschnitt.

Ohne diese Ober- und/oder Untergrenzen verläuft die Kennlinie durchgehend mit konstanter Steigung. Bei dem dargestellten Ausführungsbeispiel ist eine lineare Kennlinie/Regelkurve vorausgesetzt. Prinzipiell kann jedoch auch ein anderer Verlauf zugrunde gelegt werden, der dann entsprechend in Abhängigkeit von den Erfahrungswerten des Anwenders anpassbar ist. Prinzipiell kann auch nur eine Untergrenze oder nur eine Obergrenze vorgegeben werden.

Nach der vorbeschriebenen 1-Punkt-Kalibrierung wird dann die Applikationsmenge (Düngermenge) nach dem erfindungsgemäßen Verfahren ausgebracht.

Selbstverständlich kann auch ein anderer Vegetationsindex als der IRMI und/oder ein anderer Sensor verwendet werden, um die Applikationsmenge zu ermitteln.

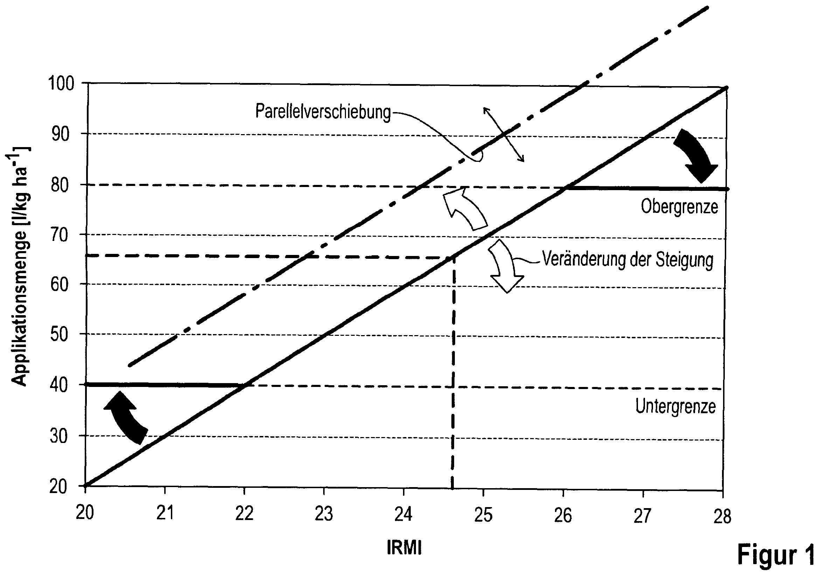

Zur Anpassung der ausgebrachten Applikationsmenge kann der Landwirt aufgrund seiner Erfahrung die Steigung der Regelkurve (siehe Figur 1) ändern. Alternativ oder zusätzlich kann er dann noch die Applikationsmenge durch die bei der erfindungsgemäßen Vorrichtung hard- oder softwareseitig vorgesehene "Taste" erhöhen oder verringern, was in einer Parallelverschiebung der Figur 1 dargestellten Kennlinie resultiert (siehe gestrichelte Linie in Figur 1). Beim dargestellten Ausführungsbeispiel ist eine lineare Kennlinie/Regelkurve vorausgesetzt. Prinzipiell kann auch ein anderer Verlauf zugrunde gelegt werden.

Wie erläutert, ist beim erfindungsgemäßen Verfahren vorgesehen, dass die Applikationsmenge auch in Abhängigkeit vom Ertragspotential des Schlags ausgegeben wird. Zu diesem Zweck wird eine Ertragspotentialkarte des betreffenden Schlags im Speicher abgelegt (Map-Overlay). Der Landwirt führt dann in einer Ertragszone (Teilschlag) die vorbeschriebene 1-Punkt-Kalibrierung durch. Sobald er in eine andere Ertragszone kommt, die aufgrund der im Speicher abgelegten Ertragspotentialkarte erkannt wird, kann die mittels der kalibrierten Kennlinie berechnete Applikationsmenge in der vorbeschriebenen Weise mit Zu- oder Abschlägen verrechnet werden - d. h., die Kennlinie kann dann in der in Figur 1 dargestellten Weise in Abhängigkeit vom Ertragspotential nach oben in Richtung einer höheren Applikationsmenge oder nach unten in Richtung einer geringeren Applikationsmenge verschoben werden. Die Höhe der Zu- und Abschläge wird vom Anwender vorgegeben.

Offenbart ist ein Verfahren zum Ausbringen einer Applikationsmenge, bei dem eine Kennlinie, beispielsweise eine lineare Kennlinie vorgegeben ist, aus der eine Applikationsmenge in Abhängigkeit von einem Entwicklungsstatus auslesbar ist. Diese Kennlinie kann vom Anwender manuell korrigiert werden. Erfindungsgemäß kann die Applikationsmenge in Abhängigkeit vom Ertragspotential ermittelt werden.

## Patentansprüche

1. Verfahren zum Bestimmen einer Applikationsmenge in Abhängigkeit von einem erfassten Entwicklungsstatus eines Pflanzenstandes, mit den Schritten:
- Auslesen oder Bestimmen des über einen Sensor erfassten Entwicklungsstatus in einem Bereich eines Schlags;
- Zuweisen einer Applikationsmenge zu diesem Entwicklungsstatus;
**gekennzeichnet durch** Schritte
- Vorgeben einer Standardsteigung einer die oben genannten Daten Entwicklungsstatus und zugewiesene Applikationsmenge enthaltenden Kennlinie zum Auslesen des Applikationsmengenbedarfs in Abhängigkeit vom Entwicklungsstatus;
- Ablage der Kennlinie in einem Datenspeicher;
- manuelle Korrektur der Steigung oder eines Verlaufs der Kennlinie mittels einer Korrektureinrichtung, wenn die ausgegebene Applikationsmenge nicht den Erfahrungswerten entspricht,
- wobei in die Bestimmung der Applikationsmenge das Ertragspotential des jeweiligen Schlags eingehen kann.

2. Verfahren nach Patentanspruch 1, wobei der Entwicklungsstatus teilflächenspezifisch über einen Sensor erfasst ist.

3. Verfahren nach Patentanspruch 2, wobei der Entwicklungsstatus mittels eines einen Vegetationsindex (IRMI) erfassenden Sensors ermittelt wird.

4. Verfahren nach einem der vorhergehenden Patentansprüche, wobei in einem Datenspeicher eine Ober- und/oder eine Untergrenze für die auszubringende Applikationsmenge abgelegt ist, die nicht über- bzw. unterschritten wird.

5. Verfahren nach einem der vorhergehenden Ansprüche mit dem Schritt:
- Ausbringen einer Applikationsmenge mittels eines Applikationssystems, die in Abhängigkeit vom jeweils ermittelten Entwicklungsstatus aus der Kennlinie ausgelesen wird.

6. Vorrichtung zur Bestimmung einer Applikationsmenge in Abhängigkeit von einem erfassten Entwicklungsstatus eines Pflanzenstandes, mit einem Sensor zum mittelbaren oder unmittelbaren Erfassen des Entwicklungsstatus, mit einem Datenspeicher, in dem eine Kennlinie abgelegt ist, aus der der Applikationsbedarf in Abhängigkeit vom Entwicklungsstatus auslesbar ist und mit einer Korrektureinrichtung zum manuellen Ändern einer Steigung oder eines Verlaufs der Kennlinie, wobei die im Datenspeicher abgelegte Kennlinie einen zuvor ausgelesenen oder bestimmten Entwicklungsstatus im Bereich eines Schlags und die diesem Entwicklungsstatus zugewiesene Applikationsmenge enthält, und eine vorgegebene Standardsteigung aufweist.

7. Vorrichtung nach Patentanspruch 6, wobei im Datenspeicher eine Ober- und/oder Untergrenze der auszubringenden Applikationsmenge abgelegt ist.

8. Verfahren oder Vorrichtung nach einem der vorhergehenden Ansprüche, wobei als Applikation Dünger ausgebracht wird und der Entwicklungsstatus der Nährstoffstatus ist.

## Claims

1. A method for determining an amount to be applied dependent on a detected growth state of a crop, comprising the steps of:
- reading or determining the growth state detected by a sensor in an area of a plot;
- allocating an amount to be applied to said growth state;
**characterized by** the steps
- presetting a standard gradient of a characteristic including the afore-mentioned data growth state and allocated amount to be applied for reading the required amount to be applied dependent on the growth state;
- storing the characteristic in a data memory;
- manually correcting the gradient or a course of the characteristic via a correcting means, if the dispensed amount to be applied does not correspond to the empirical values,
- wherein the yield potential of the respective plot can be considered when determining the amount to be applied.

2. The method according to claim 1, wherein the growth state is detected for a specific subarea via a sensor.

3. The method according to claim 2, wherein the growth state is determined by means of a sensor detecting a vegetation index (IRMI).

4. The method according to one of the preceding claims, wherein an upper limit and/or a lower limit for the application amount to be dispensed which is not exceeded or gone below is stored in a data memory.

5. The method according to one of the preceding claims comprising the step of:
- dispensing an amount to be applied by means of an application system read from the characteristic dependent on the growth state determined each time.

6. A device for determining an amount to be applied dependent on a detected growth state of a crop, comprising a sensor for indirectly or directly detecting the growth state, comprising a data memory in which a characteristic is stored from which the application requirement can be read dependent on the growth state and comprising a correcting means for manually correcting a gradient or a course of the characteristic, wherein the characteristic stored in the data memory comprises a growth state read out or determined beforehand in the area of a plot and the amount to be applied allocated to this growth state, and comprises a predetermined standard gradient.

7. The device according to claim 6, wherein an upper limit and/or lower limit of the application amount to be dispensed is stored in the data memory.

8. The method or device according to one of the preceding claims, wherein fertilizer is dispensed as application and the growth state is the nutrient state.

## Revendications

1. Procédé pour la détermination d'une quantité d'application en fonction d'un état de développement mesuré d'une plantation, avec les étapes suivantes :
- lecture ou détermination de l'état de développement mesuré à l'aide d'un capteur dans une zone d'abattage ;
- attribution d'une quantité d'application à cet état de développement ;
**caractérisé par** les étapes suivantes :
- prédétermination d'une pente standard d'une courbe caractéristique contenant les données mentionnées : état de développement et quantité d'application attribuée, pour la lecture du besoin en quantité d'application en fonction de l'état de développement ;
- enregistrement de la courbe caractéristique dans une mémoire de données ;
- correction manuelle de la pente ou d'un tracé de la courbe caractéristique au moyen d'un dispositif de correction lorsque la quantité d'application obtenue ne correspond pas aux valeurs empiriques,
- dans lequel, le potentiel de rendement de l'abattage concerné peut être pris en compte dans la détermination de la quantité d'application.

2. Procédé selon la revendication 1, dans lequel l'état de développement est mesuré à l'aide d'un capteur en fonction de surfaces partielles.

3. Procédé selon la revendication 2, dans lequel l'état de développement est déterminé au moyen d'un capteur mesurant un indice de végétation (IRMI).

4. Procédé selon l'une des revendications précédentes, dans lequel, dans une mémoire de données, une limite supérieure et/ou une limite inférieure pour la quantité d'application à épandre est enregistrée, qui ne doit pas être dépassée ou sous laquelle il ne faut pas tomber.

5. Procédé selon l'une des revendications précédentes, avec l'étape suivante :
- épandage d'une quantité d'application au moyen d'un système d'application qui est lu sur la courbe caractéristique en fonction de l'état de développement déterminé.

6. Dispositif pour la détermination d'une quantité d'application en fonction d'un état de développement mesuré d'une plantation, avec un capteur pour la mesure indirecte ou directe de l'état de développement, avec une mémoire de données dans laquelle une courbe caractéristique est enregistrée, sur laquelle le besoin en quantité d'application peut être lue en fonction de l'état de développement et avec un dispositif de correction pour la modification manuelle d'une pente ou d'un tracé de la courbe caractéristique, dans lequel la courbe caractéristique enregistrée dans la mémoire de données contient un état de développement préalablement lu ou déterminé dans la zone d'un abattage et la quantité d'application correspondant à cet état de développement et présente une pente standard prédéterminée.

7. Dispositif selon la revendication 6, dans lequel, dans la mémoire de données, est enregistrée une limite supérieure et/ou une limite inférieure pour la quantité d'application à épandre.

8. Procédé ou dispositif selon l'une des revendications précédentes, dans lequel l'application est un épandage d'engrais et l'état de développement est l'état des substances nutritives.
